# EUROPÄISCHE PATENTSCHRIFT

(11) **EP 3 853 176 B1**
(45) Veröffentlichungstag und Bekanntmachung des Hinweises auf die Patenterteilung: **26.03.2025**
(21) Anmeldenummer: 19769763.4
(22) Anmeldetag: 13.09.2019
(51) Int. Cl.: C01C 1/02, B01D 1/28, B01D 5/00, F25J 3/08

(54) **VERFAHREN ZUR ENTFERNUNG VON INERTGASEN AUS FLÜSSIGEM AMMONIAK**
METHOD FOR REMOVING INERT GAS FROM LIQUID AMMONIA
PROCÉDÉ POUR L'ÉLIMINATION DE GAZ INERTES D'AMMONIAC LIQUIDE

(30) Priorität: 19.09.2018 DE 102018215884
(43) Veröffentlichungstag der Anmeldung: 28.07.2021
(73) Patentinhaber: thyssenkrupp Uhde GmbH, 44141 Dortmund (DE); thyssenkrupp AG, 45143 Essen (DE)
(72) Erfinder: NÖLKER, Klaus, 44265 Dortmund (DE)
(74) Vertreter: thyssenkrupp Intellectual Property GmbH
(86) Internationale Anmeldenummer: PCT/EP2019/074484
(87) Internationale Veröffentlichungsnummer: WO 2020/058117

(56) Entgegenhaltungen:
- WO-A1-03/008333
- TW-A- 201 238 896
- US-A- 2 050 511

## Beschreibung

Die vorliegende Erfindung betrifft ein Verfahren zur Entfernung von in flüssigem Ammoniak gelösten Inertgasen.

Bei der Herstellung von Ammoniak enthält das Synthesegas neben Wasserstoff und Stickstoff zusätzlich üblicherweise Inertgase wie Methan und Edelgase, welche die Ausbeute an Ammoniak beeinträchtigen. Bei diesen Verfahren wird üblicherweise zunächst frisches Synthesegas mehrstufig auf hohen Druck verdichtet. Dann wird das verdichtete, frische Synthesegas in einen Kreislauf eingespeist, der durch einen oder mehrere katalysatorgefüllte Reaktoren geführt wird, in denen Ammoniak erzeugt wird. Im Kreislauf ist ein Abscheidesystem vorgesehen, mit dem das erzeugte Ammoniak aus dem Kreislauf in flüssiger Form entnommen wird.

Die Inertgase sind in Ammoniak nur in geringer Konzentration löslich und werden daher nur zu einem geringen Teil zusammen mit dem Ammoniak entnommen. Um eine Anreicherung der Inertgase im Kreislauf zu vermeiden, wird bei diesen herkömmlichen Verfahren beständig ein Teil des im Kreislauf geführten Gases als Spülgas (*Purge*) ausgeschleust. Aus diesem ausgeschleusten Spülgas werden anschließend Reste von Ammoniak ausgewaschen. Wasserstoff sowie ggf. auch Stickstoff werden abgeschieden und zurückgewonnen, beispielsweise über Membranen oder durch Zerlegung bei tiefen Temperaturen. Die verbleibenden Inertgase, insbesondere Methan, Argon und Helium werden verworfen oder anderweitig verwertet, insbesondere zu Heizzwecken. Der zurückgewonnene Wasserstoff sowie ggf. auch der zurückgewonnene Stickstoff werden dem frischen Synthesegas vor der Verdichtung beigemischt und auf diese Weise verwertet.

Ein Abtrennen von höhersiedenden Gasen aus verflüssigtem Ammoniak mittels Verdampfen des Ammoniaks ist aus WO 03/008333 A1 und US 2 050 511 A bekannt.

DE 100 57 863 A1 offenbart ein Verfahren zur Herstellung von Ammoniak aus frischem Synthesegas, welches außer Wasserstoff und Stickstoff inerte Bestandteile enthält, in mindestens zwei Reaktionssystemen, wobei die Synthese von Ammoniak aus Synthesegas nacheinander in verschiedenen Synthesesystemen erfolgt. Dabei werden Inertgasbestandteile über einen Spülgasstrom (*Purge*) abgetrennt und ausgeschleust. Als Inertgase oder "Inerte" werden bei der Herstellung von Ammoniak solche Komponenten bezeichnet, die sich bei der Umsetzung von Wasserstoff und Stickstoff zu Ammoniak inert verhalten. Zu diesen Inertgasen zählen beispielsweise die Edelgase und Methan.

Soweit der Begriff "Inertgase" in der vorliegenden Anmeldung verwendet wird, soll dieser Begriff im Sinne der obigen Definition verstanden werden.

Es ist energetisch jedoch ungünstig, Spülgas aus dem Kreislauf auszuschleusen, da somit große Mengen an Gas bei der Trennung einem Druckverlust unterworfen werden und danach wieder aufwändig rückverdichtet werden müssen. Aus diesem Grund wird häufig eine Anreicherung der Inertgase von ursprünglich 1 bis 2 Vol.-% im frischen Synthesegas bis auf 10 bis 20 Vol.-% innerhalb des im Kreislauf geführten Gases in Kauf genommen, obwohl damit zwangsläufig der Nachteil verbunden ist, dass die Partialdrücke von Wasserstoff und Stickstoff beträchtlich niedriger liegen als in einem Synthesekreislauf, welcher weniger oder keine Inertgase enthält. Aus diesem Grund müssen auch die Katalysatorvolumina und die sie enthaltenden Reaktoren deutlich größer dimensioniert werden, als dies ohne Inertgase im Synthesekreislauf erforderlich wäre.

Bei der Ammoniaksynthese entsteht im Reaktor aus dem Synthesegas ein Gasgemisch, welches neben dem nicht umgesetzten Wasserstoff und Stickstoff das gebildete Ammoniak sowie die Inertgase enthält. Am Ausgang des Reaktors liegt das erzeugte Ammoniak gasförmig vor. Um das Ammoniak vom Eduktgas zu trennen, wird es kondensiert, damit es flüssig aus dem Kreislauf abgezogen werden kann. Da der Taupunkt des Ammoniaks von dessen Partialdruck abhängt, wird die Kondensation von Ammoniak begünstigt durch einen hohen Synthesedruck, eine hohe Ammoniakkonzentration und eine niedrige Temperatur. Eine hohe Ammoniakkonzentration lässt sich mit großen Katalysatorvolumina sowie geringen Konzentrationen an Inertgas erzielen. Ein hoher Synthesedruck bedeutet entsprechenden Energieaufwand für die Synthesegasverdichtung und eine niedrige Abkühltemperatur setzt die entsprechenden Kühlvorrichtungen für das im Kreislauf geführte Gas voraus.

Es ist aus der Druckschrift DE 100 57 863 A1 bekannt, die Herstellung von Ammoniak gegebenenfalls in mehreren hintereinander geschalteten Reaktionssystemen vorzunehmen. Auch in diesem Fall wird das Ammoniak jeweils auskondensiert und als flüssiges Ammoniak aus dem Synthesekreislauf ausgeschleust.

Ein weiteres Verfahren zur Herstellung von Ammoniak aus einem Stickstoff-Wasserstoff-Gemisch, welches aus Erdgas gewonnen wurde, ist aus der DE 100 55 818 A1 bekannt. Hier wird das rohe Produktgasgemisch einer mehrstufigen Kühlung unterworfen und gelangt dann in einen Separator, aus dem rohes Ammoniak flüssig abgezogen wird. Die dabei abgetrennten gasförmigen Komponenten führt man in der Regel als Kreislaufgas in das Reaktionssystem zurück. Aus dieser Druckschrift ist es auch bekannt, das rohe Ammoniak anschließend einer Harnstoffsynthese zuzuführen.

Das bei der Ammoniaksynthese nach den herkömmlichen Verfahren erzeugte flüssige Ammoniak enthält jedoch in der Regel immer noch gelöste Gase, die beispielsweise bei einer sich anschließenden Harnstoffsynthese störend sind, da es zur Entstehung explosionsfähiger Abgase in der Harnstoffanlage kommen kann. Um dies zu vermeiden, ist es vorteilhaft, wenn in dem bei der Harnstoffsynthese als Einsatzstoff zugeführten flüssigen Ammoniak möglichst wenig an Gasen gelöst ist.

Die Aufgabe der vorliegenden Erfindung besteht somit darin, ein effektives Verfahren zur Entfernung von gelösten Inertgasen aus dem flüssigen Ammoniak, welches bei der Ammoniaksynthese anfällt, zur Verfügung zu stellen.

Die Lösung der vorgenannten Aufgabe liefert ein Verfahren zur Entfernung von gelösten Inertgasen aus flüssigem Ammoniak der eingangs genannten Art mit den Merkmalen des Anspruchs 1.

Erfindungsgemäß ist vorgesehen, dass das flüssige Ammoniak mit den darin gelösten Inertgasen zunächst in wenigstens einem ersten Verfahrensschritt verdampft, dann in wenigstens einem zweiten Verfahrensschritt verdichtet und anschließend in wenigstens einem dritten Verfahrensschritt wieder kondensiert wird.

Bei den im flüssigen Ammoniak, welches dem System zugeführt wird, gelösten Gasen handelt es sich in erster Linie um Inertgase gemäß obiger Definition, d.h. Gase, die sich bei der Synthese von Ammoniak neutral verhalten, wie insbesondere die Edelgase Helium und Argon sowie Methan. Jedoch können in dem Ammoniak nach der Synthese beispielsweise auch noch geringe Mengen an Wasserstoff und Stickstoff gelöst sein, die Eduktgase der Ammoniaksynthese. Diese Gase fallen nicht unter den Begriff "Inertgase" (und damit unter Anspruch 1), können aber ebenfalls bei der erfindungsgemäßen Vorgehensweise aus dem flüssigen Ammoniak entfernt werden. Die Inertgase sowie Wasserstoff und Stickstoff sind in der Regel in Mengen in dem flüssigen Ammoniak gelöst enthalten, die beispielsweise im Bereich von nicht mehr als etwa einigen hundert ppm liegen.

Ein Vorteil des erfindungsgemäßen Verfahrens liegt insbesondere darin, dass ein von den Inertgasen (und weiteren Gasen) befreiter Produktstrom von "warmem" flüssigen Ammoniak erhalten wird, welches unter gegenüber Normaldruck erhöhtem Druck steht und somit zur sofortigen Verwendung geeignet ist in Verfahren, in denen reines flüssiges unter Druck stehendes Ammoniak benötigt wird, beispielsweise für die Harnstoffsynthese oder dergleichen. Würde man hingegen das Ammoniak zunächst abkühlen, beispielsweise unter die Siedetemperatur, die für Ammoniak bei - 33 °C liegt und es auf Normaldruck entspannen, um es dann als flüssiges Ammoniak bei tiefen Temperaturen in Tanks zu lagern, müsste man es für weitere Verarbeitungsprozesse der genannten Art zunächst wieder erwärmen und komprimieren. Dazu müsste Energie aufgewandt werden, so dass das erfindungsgemäße Verfahren zu einer wesentlichen Energieeinsparung führt. Außerdem wird durch das erfindungsgemäße Verfahren das Ammoniak in einem größeren Reinheitsgrad zur Verfügung gestellt als es bei der Ammoniaksynthese üblicherweise anfällt, so dass weitere Reinigungsschritte zur Entfernung störender Restmengen im flüssigen Ammoniak gelöster Inertgase bei einer direkten Verarbeitung des aus der Ammoniaksynthese stammenden Ammoniaks nicht erforderlich sind.

Eine bevorzugte Weiterbildung der Erfindung sieht vor, dass die Kondensation des Ammoniaks im dritten Verfahrensschritt bei einem erhöhten Druck und bei einer Temperatur oberhalb von + 10 °C, vorzugsweise bei einer Temperatur im Bereich von + 10 °C bis + 30 °C erfolgt. Wenn hierin von einem Produktstrom von "warmem" flüssigem Ammoniak die Rede ist, dann ist damit gemeint, dass es sich um flüssiges Ammoniak bei einer Temperatur oberhalb der Siedetemperatur von Ammoniak unter Normaldruck handelt (diese liegt bei -33 °C), das heißt das flüssige Ammoniak liegt beispielsweise etwa bei Raumtemperatur und folglich unter erhöhtem Druck vor. Die genaue Temperatur des von gelösten Gasen gereinigten warmen flüssigen Ammoniaks hängt von der Temperatur des Kühlwassers ab, mittels dessen die Kondensation des Ammoniaks im dritten Verfahrensschritt erfolgt.

Unter "kaltem" flüssigem Ammoniak wird hingegen flüssiges Ammoniak verstanden, welches entweder unterhalb der Siedetemperatur von - 33 °C und somit bei Normaldruck flüssig vorliegt oder bei etwas höheren Temperaturen von beispielsweise zwischen - 33 °C und + 10 °C und entsprechend erhöhtem Druck flüssig vorliegt. Dieses "kalte" flüssige Ammoniak im Sinne der vorliegenden Erfindung liegt somit bei einer niedrigeren Temperatur vor als was oben erwähnte "warme" flüssige Ammoniak.

Gemäß einer bevorzugten Weiterbildung der Erfindung wird die in dem Verfahrensschritt des Verdampfens von dem Ammoniak aufgenommene Wärme zur Kühlung eines Prozessstroms verwendet. Der Verfahrensschritt des Verdampfens, bei dem der Umgebung Wärme entzogen wird, kann somit beispielsweise genutzt werden, um Prozessströme außerhalb des Systems zu kühlen, für die dann folglich kein gesondertes Kühlmittel zur Verfügung gestellt werden muss.

Gemäß einer bevorzugten Weiterbildung der Erfindung wird beispielsweise die in dem Verfahrensschritt des Verdampfens von dem Ammoniak aufgenommene Wärme zur Kondensation von Ammoniak in einer Ammoniaksyntheseanlage verwendet. Der erfindungsgemäße Prozessschritt des Verdampfens ermöglicht bei dieser Variante eine Kopplung mit dem Schritt der Kondensation von Ammoniak in einer Ammoniaksyntheseanlage. Beide Verfahrensschritte können in energetisch günstiger Weise miteinander verknüpft werden.

Gemäß einer bevorzugten Weiterbildung der vorliegenden Erfindung erfolgt die Kondensation des Ammoniaks im dritten Verfahrensschritt bei einem erhöhten Druck im Bereich von zum Beispiel etwa 10 bar bis etwa 30 bar, vorzugsweise im Bereich von etwa 15 bar bis etwa 25 bar. Der hier erforderliche Druck hängt wie oben erwähnt wurde von der jeweiligen Temperatur ab, bei der das Ammoniak kondensiert wird.

Gemäß einer bevorzugten Weiterbildung der Erfindung wird das verdampfte Ammoniak nach dem Verdampfen gemeinsam mit den zuvor im Ammoniak gelösten Gasen verdichtet. Dies bedeutet, die Entfernung der gelösten Gase erfolgt erst danach im Ammoniakkondensator.

Gemäß einer bevorzugten Weiterbildung der Erfindung ist es so, dass das verdichtete Ammoniak nach dem Verdichten mit Hilfe von Kühlwasser kondensiert wird. Die Kondensationstemperatur hängt folglich von der Temperatur des verwendeten Kühlwassers ab.

Eine bevorzugte Weiterbildung der Erfindung sieht vor, dass die bei der Kondensation des Ammoniaks im Ammoniak unlöslichen Gase aus der zur Kondensation verwendeten Vorrichtung abgezogen werden. Bei der Kondensation werden die Temperatur und der Druck bevorzugt so gewählt, dass das Ammoniak gerade kondensiert. Bei der Siedetemperatur oder nahe dieser ist die Löslichkeit der Gase in dem flüssigen Ammoniak am geringsten, so dass die Gase dann nicht mehr im Ammoniak gelöst sind und folglich als Gase von dem flüssigen Ammoniak getrennt vorliegen und abgezogen werden können.

Gemäß einer möglichen Weiterbildung der Erfindung kann es vorgesehen sein, dass die in dem zuvor beschriebenen Verfahren abgezogenen Gase zurückgeführt werden. Dies ist beispielsweise dann sinnvoll, wenn diese Gase noch Anteile der Eduktgase Wasserstoff und/oder Stickstoff enthalten, welche dann in die Anlage zur Herstellung von Ammoniak zurückgeführt und dort zur Herstellung von weiterem Ammoniak verwendet werden können.

Gemäß einer bevorzugten Weiterbildung der Erfindung wird von einem Eduktstrom an flüssigem Ammoniak nur ein erster Teilstrom in dem ersten Verfahrensschritt verdampft, danach verdichtet, anschließend kondensiert und als von den Gasen, insbesondere Inertgasen, befreiter Ammoniak in einem flüssigen, unter Druck stehenden warmen Strom aus dem System abgeführt, während ein zweiter Teilstrom von dem Eduktstrom abgezweigt und zunächst ohne weitere Aufarbeitung als flüssiger kalter Strom aus dem System abgezweigt wird. Bezüglich der hier verwendeten Begriffe "warmer" Strom bzw. "kalter" Strom wird auf die oben angegebenen Definitionen verwiesen. Der "warme" Teilstrom wird in der Regel einer Anlage zugeführt, in der eine weitere Verarbeitung des Ammoniaks vorgesehen ist, beispielsweise einer Harnstoffsyntheseanlage. Dies hat den Vorteil, dass dort das gereinigte Ammoniak, welches bei einer erhöhten Temperatur und entsprechend erhöhtem Druck vorliegt, direkt weiterverarbeitet werden kann, so dass keine Erwärmung und Verdichtung des Ammoniaks notwendig ist. Somit vermeidet man hier auch einen Energieverlust, der dann auftreten würde, wenn man zunächst das Ammoniak unter seinen Siedepunkt (-33 °C) abkühlen und gekühlt bei Normaldruck zwischenlagern würde.

Der zweite Teilstrom, der von dem Eduktstrom abgezweigt wird, kann hingegen als kalter Strom von flüssigem Ammoniak zunächst zwischengelagert werden und muss daher nicht die erfindungsgemäß vorgesehenen Reinigungsschritte Verdampfen, Verdichten und Kondensation durchlaufen. Man kann diesen zweiten Teilstrom kalt beispielsweise in einem Tank zwischenlagern. Dazu wird dieser Teilstrom entspannt und unter die Kondensationstemperatur des Ammoniaks von -33 °C abgekühlt. Bei dieser Entspannung gasen die im Ammoniak gelösten Gase aus, so dass für diesen Teilstrom der erfindungsgemäße Reinigungsprozess zur Entfernung von im Ammoniak gelösten Gasen nicht erforderlich ist. Mit anderen Worten, ein Teil des Ammoniaks, bei dem von vornherein bekannt ist, dass dieser nicht warm und unter erhöhtem Druck weiterverarbeitet wird, sondern für diesen Teil eine kalte Zwischenlagerung vorgesehen ist, kann als kalter Teilstrom abgezweigt werden.

Gemäß einer bevorzugten Weiterbildung der Erfindung stellt der erste warme Teilstrom des Ammoniaks, welcher kondensiert und von den Inertgasen befreit wird, einen Hauptstrom des aus dem System abgeführten Ammoniaks dar. Je nachdem, welche Verwendung für das Ammoniak vorgesehen ist und wie die Anbindung des erfindungsgemäßen Verfahrens an nachfolgende Verfahren zur weiteren Verarbeitung des Ammoniaks erfolgt, kann der warme Teilstrom, der den Hauptstrom ausmacht, beispielsweise 70 % bis 100 %, vorzugsweise bis zu etwa 90 %, des im System verarbeiteten Ammoniaks ausmachen, so dass der nicht weiter aufbereitete Teilstrom, der als kalter Teilstrom abgeführt wird, beispielsweise einen geringeren Teilstrom von 0 % bis 30 %, vorzugsweise von wenigstens etwa 10 %, des der Anlage insgesamt zugeführten Eduktstroms ausmacht.

Gegenstand der vorliegenden Erfindung ist weiterhin eine Anlage zur Entfernung von in flüssigem Ammoniak gelösten Inertgasen, umfassend wenigstens eine Leitung für die Zuführung von flüssigem Ammoniak zu wenigstens einem Ammoniakverdampfer, wenigstens einen mit diesem Ammoniakverdampfer in Wirkverbindung stehenden Ammoniakverdichter, wenigstens einen mit dem Ammoniakverdichter in Wirkverbindung stehenden Ammoniakkondensator mit Mitteln zum Abführen eines Stroms von im Ammoniakkondensator abgetrennten Inertgasen sowie wenigstens einen mit dem Ammoniakkondensator in Wirkverbindung stehenden Sammelbehälter zur Aufnahme von von Inertgasen befreitem flüssigen Ammoniak.

Gemäß einer weiteren bevorzugten Weiterbildung der erfindungsgemäßen Anlage ist die Leitung für die Zuführung von flüssigem Ammoniak mit einer Ausgangsleitung einer Anlage zur Herstellung von Ammoniak verbunden oder ist eine solche Ausgangsleitung. Bei dieser bevorzugten Variante kann somit Ammoniak direkt aus der Herstellung ohne Zwischenkühlung unter dem Druck und mit der Temperatur, bei der es in diesem Herstellungsprozess anfällt, in der erfindungsgemäßen Anlage von den im Ammoniak gelösten Gasen befreit und so weiter gereinigt werden.

Gemäß einer weiteren bevorzugten Weiterbildung der Erfindung umfasst die Anlage einen Behälter für die Aufnahme von mit Inertgasen verunreinigtem Ammoniak, von dem aus eine erste Leitung zu dem Ammoniakverdampfer führt, wobei von dieser ersten Leitung wenigstens eine Zweigleitung abzweigt, mittels derer ein Teilstrom von flüssigem Ammoniak aus der Anlage abgeführt wird. Auf diese Weise ist es möglich, den Ammoniak nur teilweise, in der Regel zum überwiegenden Teil, in der erfindungsgemäßen Anlage von den im Ammoniak gelösten Gasen zu befreien und als warmen gereinigten Teilstrom abzuführen, während man einen kleineren Teilstrom über die Zweigleitung ohne den Reinigungsprozess als kalten Strom von flüssigem Ammoniak weiterleitet, um diesen dann in der Regel kalt zu speichern.

Nachfolgend wird die vorliegende Erfindung anhand eines Ausführungsbeispiels unter Bezugnahme auf die beiliegende Zeichnung näher erläutert. Dabei zeigt:

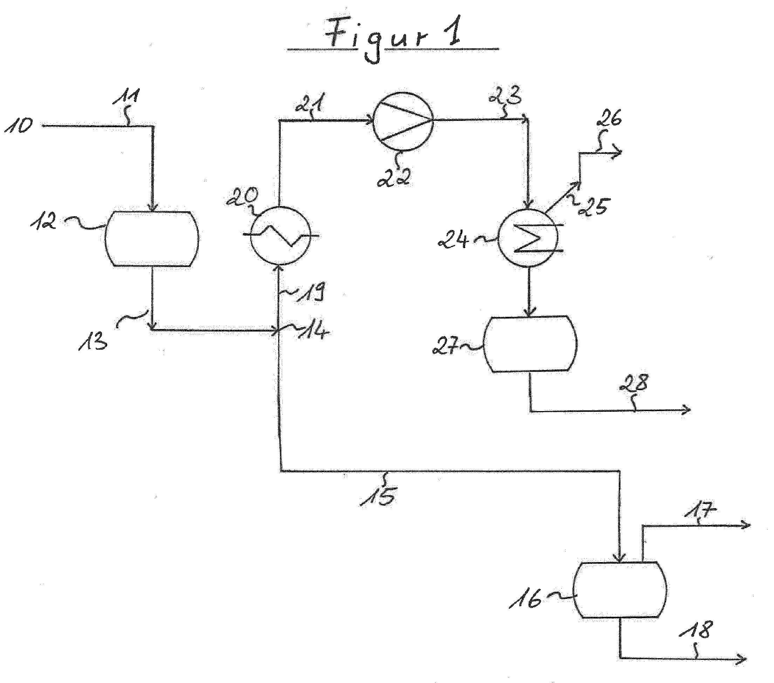

Figur 1 ein schematisch vereinfachtes Fließbild einer beispielhaften erfindungsgemäßen Anlage.

Nachfolgend wird unter Bezugnahme auf Figur 1 ein mögliches Ausführungsbeispiel der vorliegenden Erfindung näher erläutert. Die Darstellung zeigt ein vereinfachtes Fließschema einer beispielhaften erfindungsgemäßen Anlage zur Entfernung von in flüssigem Ammoniak gelösten Inertgasen aus dem Ammoniak. Die Darstellung ist schematisch stark vereinfacht und es sind nur die im Rahmen der vorliegenden Erfindung wesentlichen Anlagenteile dargestellt.

Ein Prozessstrom 10 von flüssigem Ammoniak, welcher gelöste Gase wie Inertgase und gegebenenfalls weitere Gase enthält und welcher von einer Anlage zur Herstellung von Ammoniak stammt (diese Ammoniakanlage ist hier nicht dargestellt), wird über die Leitung 11 einem Behälter 12 zugeführt, in dem flüssiges Ammoniak vor der erfindungsgemäßen Aufbereitung gegebenenfalls zwischengespeichert werden kann. Aus diesem Behälter 12 wird flüssiges Ammoniak über die Leitung 13 abgeführt, wobei sich diese Leitung stromabwärts an einer Abzweigung 14 teilt, so dass zwei Teilströme von flüssigem Ammoniak entstehen. Ein erster geringerer Teilstrom strömt über die Leitung 15 und wird als kalter Teilstrom von flüssigem Ammoniak einem weiteren Tank 16 zugeführt. Dort kann das Ammoniak auf Normaldruck entspannt werden, wobei im Ammoniak gelöste Gase ausgasen und über die Leitung 17 abgeführt werden können. Das kalte flüssige Ammoniak kann über Leitung 18 abgeführt werden und z.B. exportiert oder nach Erwärmen und Komprimieren über Leitung 17 einer Harnstoffanlage zugeführt werden.

Von der Abzweigung 14 ausgehend wird hingegen der überwiegende Teilstrom nach dem erfindungsgemäßen Verfahren aufbereitet und dazu über die Leitung 19 einem Ammoniakverdampfer 20 zugeführt. Nach dem Verdampfen wird der Prozessstrom über die Leitung 21 einem Ammoniakverdichter 22 zugeführt. Nach der Verdichtung gelangt der Prozessstrom über die Leitung 23 zu einem Ammoniakkondensator 24. Dort kann das verdichtete Ammoniak mit Hilfe von Kühlwasser kondensiert werden. Die Temperatur des Ammoniaks liegt nach der Kondensation beispielsweise bei etwa 30 °C und das kondensierte flüssige Ammoniak steht entsprechend unter erhöhtem Druck. Bei dieser Kondensation treten die aus dem Ammoniak abzutrennenden Gase aus und können daher gasförmig über die Leitung 25 aus dem Kondensator abgezogen und über die Ausgangsleitung 26 aus der Anlage abgeführt werden.

Das gereinigte flüssige Ammoniak kann gegebenenfalls unter Druck bei der entsprechenden Temperatur in einem Tank 27 zwischengespeichert werden. Aus diesem Tank kann dann ein warmer Strom von flüssigem unter Druck stehendem Ammoniak über die Leitung 28 einer weiteren Anlage zugeführt werden, beispielsweise einer Harnstoffanlage. Es kann auch die Zwischenspeicherung in dem Tank 27 entfallen, wenn beispielsweise unmittelbar Bedarf an einer entsprechenden Menge an "warmem" flüssigem Ammoniak für einen weiteren Prozess besteht, in dem das Ammoniak als warmer unter Druck stehender Strom benötigt wird und somit ohne zwischenzeitliche Kühlung direkt weiterverarbeitet werden kann.

Der Vorteil des erfindungsgemäßen Verfahrens besteht somit darin, dass mittels dieses ein gereinigter "warmer" Teilstrom von flüssigem Ammoniak einerseits und gegebenenfalls außerdem ein "kalter" Teilstrom von flüssigem Ammoniak erzeugt werden kann, welcher keiner gesonderten Aufbereitung bedarf.

### Bezugszeichenliste

- 10: Prozessstrom
- 11: Leitung
- 12: Behälter
- 13: Leitung
- 14: Abzweigung
- 15: Leitung
- 16: Tank
- 17: Leitung
- 18: Leitung
- 19: Leitung/ erster Teilstrom
- 20: Ammoniakverdampfer
- 21: Leitung
- 22: Ammoniakverdichter
- 23: Leitung
- 24: Ammoniakkondensator
- 25: Leitung
- 26: Ausgangsleitung
- 27: Tank
- 28: Leitung

## Patentansprüche

1. Verfahren zur Entfernung von in flüssigem Ammoniak gelösten Inertgasen, wie die Edelgase Helium, und Argon sowie Methan, **dadurch gekennzeichnet, dass** das flüssige Ammoniak mit den darin gelösten Gasen zunächst in wenigstens einem ersten Verfahrensschritt verdampft, dann in wenigstens einem zweiten Verfahrensschritt verdichtet und anschließend in wenigstens einem dritten Verfahrensschritt wieder kondensiert wird.

2. Verfahren nach Anspruch 1, **dadurch gekennzeichnet, dass** die Kondensation des Ammoniaks im dritten Verfahrensschritt bei einem erhöhten Druck und bei einer Temperatur oberhalb von + 10 °C, vorzugsweise bei einer Temperatur im Bereich von + 10 °C bis + 30 °C erfolgt.

3. Verfahren nach Anspruch 1 oder 2, **dadurch gekennzeichnet, dass** die Kondensation des Ammoniaks im dritten Verfahrensschritt bei einem erhöhten Druck im Bereich von 10 bar bis 30 bar, vorzugsweise im Bereich von 15 bar bis 25 bar erfolgt.

4. Verfahren nach einem der Ansprüche 1 bis 3, **dadurch gekennzeichnet, dass** die in dem Verfahrensschritt des Verdampfens von dem Ammoniak aufgenommene Wärme zur Kühlung eines Prozessstroms verwendet wird.

5. Verfahren nach Anspruch 4, **dadurch gekennzeichnet, dass** die in dem Verfahrensschritt des Verdampfens von dem Ammoniak aufgenommene Wärme zur Kondensation von Ammoniak in einer Ammoniaksyntheseanlage verwendet wird.

6. Verfahren nach einem der Ansprüche 1 bis 5, **dadurch gekennzeichnet, dass** das verdampfte Ammoniak gemeinsam mit den im Ammoniak gelösten Gasen verdichtet wird.

7. Verfahren nach einem der Ansprüche 1 bis 6, **dadurch gekennzeichnet, dass** das verdichtete Ammoniak anschließend mit Hilfe von Kühlwasser kondensiert wird.

8. Verfahren nach einem der Ansprüche 1 bis 7, **dadurch gekennzeichnet, dass** die bei der Kondensation des Ammoniaks im Ammoniak unlöslichen Gase aus der zur Kondensation verwendeten Vorrichtung (24) abgezogen werden.

9. Verfahren nach Anspruch 8, **dadurch gekennzeichnet, dass** die abgezogenen Gase in eine Anlage zur Herstellung von Ammoniak zurückgeführt werden.

10. Verfahren nach einem der Ansprüche 1 bis 9, **dadurch gekennzeichnet, dass** von einem Eduktstrom an flüssigem Ammoniak nur ein erster Teilstrom (19) in dem ersten Verfahrensschritt verdampft, danach verdichtet, anschließend kondensiert und als von den Gasen, insbesondere Inertgasen, befreiter Ammoniak in einem flüssigen, unter Druck stehenden warmen Strom (28) aus dem System abgeführt wird, während ein zweiter Teilstrom (15) von dem Eduktstrom abgezweigt und zunächst ohne weitere Aufarbeitung als flüssiger kalter Strom aus dem System abgezweigt wird.

11. Verfahren nach Anspruch 10, **dadurch gekennzeichnet, dass** der erste Teilstrom (19) des Ammoniaks, welcher kondensiert und von den Inertgasen befreit wird, einen Hauptstrom des aus dem System abgeführten Ammoniaks darstellt.

12. Verfahren nach Anspruch 10 oder 11, **dadurch gekennzeichnet, dass** der zweite kalte Teilstrom (15) einem Tank (16) zugeführt, in diesem Tank auf Normaldruck entspannt wird und dabei die zuvor in dem Ammoniak gelösten Gase, insbesondere Inertgase ausgasen und danach aus dem Tank (16) abgezogen werden.

13. Anlage zur Entfernung von in flüssigem Ammoniak gelösten Inertgasen, wie die Edelgase Helium, und Argon sowie Methan, umfassend wenigstens eine Leitung (11, 13, 19) für die Zuführung von flüssigem Ammoniak zu wenigstens einem Ammoniakverdampfer (20), wenigstens einen mit diesem Ammoniakverdampfer (20) in Wirkverbindung stehenden Ammoniakverdichter (22), wenigstens einen mit dem Ammoniakverdichter (22) in Wirkverbindung stehenden Ammoniakkondensator (24) mit Mitteln (25) zum Abführen eines Stroms von im Ammoniakkondensator (24) abgetrennten Inertgasen sowie wenigstens einen mit dem Ammoniakkondensator (24) in Wirkverbindung stehenden Sammelbehälter (27) zur Aufnahme von Inertgasen befreitem flüssigen Ammoniak.

14. Anlage nach Anspruch 13, **dadurch gekennzeichnet, dass** die Leitung (11) für die Zuführung von flüssigem Ammoniak mit einer Ausgangsleitung einer Anlage zur Herstellung von Ammoniak verbunden ist oder eine solche Ausgangsleitung ist.

15. Anlage nach einem der Ansprüche 13 oder 14, **dadurch gekennzeichnet, dass** diese einen Behälter (12) für die Aufnahme von mit Inertgasen verunreinigtem Ammoniak umfasst, von dem aus eine erste Leitung (13) zu dem Ammoniakverdampfer (20) führt, wobei von dieser ersten Leitung wenigstens eine Zweigleitung (15) abzweigt, mittels derer ein Teilstrom von kaltem flüssigem Ammoniak aus der Anlage abgeführt und vorzugsweise einem weiteren Tank (16) zugeführt wird, in dem das Ammoniak auf Normaldruck entspannt wird.

## Claims

1. A method of removing inert gases, such as the noble gases helium and argon, and methane, dissolved in liquid ammonia, **characterized in that** the liquid ammonia together with the gases dissolved therein is first evaporated in at least one first method step, then compressed in at least one second method step, and subsequently condensed further in at least one third method step.

2. The method as claimed in claim 1, **characterized in that** the ammonia is condensed in the third method step at an elevated pressure and at a temperature above +10°C, preferably at a temperature in the range from +10°C to +30°C.

3. The method as claimed in claim 1 or 2, **characterized in that** the ammonia is condensed in the third method step at an elevated pressure in the range from 10 bar to 30 bar, preferably in the range from 15 bar to 25 bar.

4. The method as claimed in any of claims 1 to 3, **characterized in that** the heat absorbed by the ammonia in the method step of evaporation is used for cooling of a process stream.

5. The method as claimed in claim 4, **characterized in that** the heat absorbed by the ammonia in the method step of evaporation is used for condensation of ammonia in an ammonia synthesis plant.

6. The method as claimed in any of claims 1 to 5, **characterized in that** the evaporated ammonia is compressed together with the gases dissolved in the ammonia.

7. The method as claimed in any of claims 1 to 6, **characterized in that** the compressed ammonia is then condensed with the aid of cooling water.

8. The method as claimed in any of claims 1 to 7, **characterized in that** the gases that are insoluble in ammonia on condensation of the ammonia are drawn off from the apparatus (24) used for condensation.

9. The method as claimed in claim 8, **characterized in that** the gases drawn off are recycled into a plant for preparation of ammonia.

10. The method as claimed in any of claims 1 to 9, **characterized in that** only a first substream (19) of a reactant stream of liquid ammonia is evaporated, then compressed, subsequently condensed and removed from the system as ammonia that has been freed of the gases, especially inert gases, in a liquid pressurized warm stream (28), while a second substream (15) is branched off from the reactant stream and branched off from the system as a cold liquid stream without further workup at first.

11. The method as claimed in claim 10, **characterized in that** the first substream (19) of the ammonia which is condensed and freed of the inert gases constitutes a main stream of the ammonia removed from the system.

12. The method as claimed in claim 10 or 11, **characterized in that** the second cold substream (15) is fed to a tank (16) and is expanded to standard pressure in said tank, in the course of which the gases, especially inert gases, that were dissolved in the ammonia beforehand outgas and then are drawn off from the tank (16).

13. A plant for removal of inert gases, such as the noble gases helium and argon, and methane, dissolved in liquid ammonia, comprising at least one conduit (11, 13, 19) for the supply of liquid ammonia to at least one ammonia evaporator (20), at least one ammonia compressor (22) functionally connected to said ammonia evaporator (20), at least one ammonia condenser (24) functionally connected to said ammonia compressor (22) and having means (25) of removing a stream of inert gases separated off in said ammonia condenser (24), and at least one collecting vessel (27) which is functionally connected to said ammonia condenser (24) and is for accommodating liquid ammonia that has been freed of inert gases.

14. The plant as claimed in claim 13, **characterized in that** the conduit (11) for the supply of liquid ammonia is connected to an output conduit of a plant for preparation of ammonia or is such an output conduit.

15. The plant as claimed in either of claims 13 and 14, **characterized in that** it comprises a vessel (12) for the accommodation of ammonia contaminated with inert gases, from which a first conduit (13) leads to the ammonia evaporator (20), wherein at least one branch conduit (15) that branches off from said first conduit is used to remove a substream of cold liquid ammonia from the plant and preferably to supply it to a further tank (16) in which the ammonia is expanded to standard pressure.

## Revendications

1. Procédé d'élimination des gaz inertes, tels que les gaz nobles hélium et argon, et le méthane, dissous dans l'ammoniac liquide, **caractérisée par le fait que** l'ammoniac liquide et les gaz qui y sont dissous sont d'abord évaporés au cours d'au moins une première étape, puis comprimés au cours d'au moins une deuxième étape, et enfin condensés au cours d'au moins une troisième étape.

2. Procédé selon la revendication 1, **caractérisée par le fait que l**'ammoniac est condensé au cours de la troisième étape de la méthode à une pression élevée et à une température supérieure à +10°C, de préférence à une température comprise entre +10°C et +30°C.

3. Procédé selon la revendication 1 ou 2, **caractérisée par le fait que l**'ammoniac est condensé au cours de la troisième étape de la méthode à une pression élevée comprise entre 10 et 30 bars, de préférence entre 15 et 25 bars.

4. Procédé selon l'une des revendications 1 à 3, **caractérisée par le fait que** la chaleur absorbée par l'ammoniac au cours de l'étape d'évaporation est utilisée pour le refroidissement d'un flux de traitement.

5. Procédé selon la revendication 4, **caractérisée par le fait que** la chaleur absorbée par l'ammoniac au cours de l'étape d'évaporation est utilisée pour la condensation de l'ammoniac dans une usine de synthèse de l'ammoniac.

6. Procédé selon l'une des revendications 1 à 5, **caractérisé par le fait que** l'ammoniac évaporé est comprimé avec les gaz dissous dans l'ammoniac.

7. Procédé selon l'une des revendications 1 à 6, **caractérisé par le fait que** l'ammoniac comprimé est ensuite condensé à l'aide d'eau de refroidissement.

8. Procédé selon l'une quelconque des revendications 1 à 7, **caractérisé par le fait que** les gaz insolubles dans l'ammoniac lors de la condensation de l'ammoniac sont prélevés de l'appareil (24) utilisé pour la condensation.

9. Procédé selon la revendication 8, **caractérisée par le fait que** les gaz prélevés sont recyclés dans une installation de préparation d'ammoniac.

10. Procédé selon l'une quelconque des revendications 1 à 9, **caractérisé en ce que** au cours de la première étape, seul un premier sous-flux (19) est évaporé d'un flux réactif d'ammoniac liquide, puis comprimé, ensuite condensé et extrait du système sous forme d'ammoniac libéré des gaz, en particulier des gaz inertes, dans un flux chaud liquide sous pression (28), tandis qu'un second sous-flux (15) est séparé du flux réactif et ensuite séparé du système sous forme d'un flux liquide froid sans autre traitement.

11. Procédé selon la revendication 10, **caractérisé par le fait que** le premier sous-flux (19) d'ammoniac condensé et débarrassé des gaz inertes constitue un flux principal d'ammoniac extrait du système.

12. Procédé selon la revendication 10 ou 11, **caractérisé par le fait que** le second sous-flux froid (15) est acheminé vers un réservoir (16) et qu'il est détendu à la pression normale dans ledit réservoir, au cours de quoi les gaz, qui au préalable ont été dissous dans l'ammoniac, en particulier les gaz inertes, sortent en tant que gaz et sont ensuite extraits du réservoir (16).

13. Installation pour l'élimination de gaz inertes, tels que les gaz nobles hélium et argon, et le méthane, dissous dans l'ammoniac liquide, comprenant au moins un conduit (11, 13, 19) pour l'alimentation en ammoniac liquide d'au moins un évaporateur d'ammoniac (20), au moins un compresseur d'ammoniac (22) fonctionnellement relié à cet évaporateur d'ammoniac (20), au moins un condenseur d'ammoniac (24) fonctionnellement relié audit compresseur d'ammoniac (22) et doté de moyens (25) de l'extraction d'un flux de gaz inertes séparés dans ledit condenseur d'ammoniac (24), et au moins un récipient collecteur (27) fonctionnellement relié audit condenseur d'ammoniac (24) et destiné à recevoir l'ammoniac liquide débarrassé des gaz inertes.

14. L'installation selon la revendication 13, **caractérisée par le fait que** le conduit (11) pour l'alimentation en ammoniac liquide est relié à un conduit de sortie d'une installation de préparation d'ammoniac ou est un tel conduit de sortie.

15. L'installation selon l'une des revendications 13 et 14, **caractérisée par le fait qu'**elle comprend un récipient (12) destiné à recevoir de l'ammoniac contaminé par des gaz inertes, à partir duquel un premier conduit (13) mène à l'évaporateur d'ammoniac (20), dans lequel au moins un conduit secondaire (15) dérivé dudit premier conduit est utilisé pour extraire un sous-flux d'ammoniac liquide froid de l'installation et, de préférence, pour l'acheminer vers un autre réservoir (16) dans lequel l'ammoniac est détendu à la pression normale.
